(19) Europäisches Patentamt
European Patent Office
Office européen des brevets

(11) EP 4 056 865 A1

(12) EUROPEAN PATENT APPLICATION
published in accordance with Art. 153(4) EPC

(43) Date of publication:
14.09.2022 Bulletin 2022/37

(51) International Patent Classification (IPC):
F16C 27/06 (2006.01)    F16H 25/20 (2006.01)
F16H 25/22 (2006.01)    F16H 25/24 (2006.01)
B62D 5/04 (2006.01)

(21) Application number: 20884055.3

(22) Date of filing: 06.11.2020

(52) Cooperative Patent Classification (CPC):
B62D 5/04; F16C 27/06; F16H 25/20; F16H 25/22;
F16H 25/24

(86) International application number:
PCT/JP2020/041449

(87) International publication number:
WO 2021/090907 (14.05.2021 Gazette 2021/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 07.11.2019 JP 2019202769

(71) Applicant: NSK Ltd.
Tokyo 141-8560 (JP)

(72) Inventors:
• SAKODA, Hironari
  Fujisawa-shi, Kanagawa 251-8501 (JP)
• CHIHARA, Yuta
  Fujisawa-shi, Kanagawa 251-8501 (JP)
• MIWA, Takuya
  Fujisawa-shi, Kanagawa 251-8501 (JP)

(74) Representative: SSM Sandmair
Patentanwälte Rechtsanwalt
Partnerschaft mbB
Joseph-Wild-Straße 20
81829 München (DE)

(54) **POWER TRANSMISSION DEVICE**

(57) A power transmission device includes: a housing; a ball screw device including a nut housed in the housing, a screw shaft passing through the nut, and balls disposed between the nut and the screw shaft; a first bearing and a second bearing that are disposed to be adjacent to each other in a center axis direction parallel with a center axis of the nut between the housing and the nut; and a preload applying member constituted of an elastic body and configured to apply preloads to the first bearing and the second bearing. The first bearing and the second bearing respectively include outer rings that are fitted to the housing and separated from each other in the center axis direction, and the first bearing and the second bearing are disposed to be a face-to-face combination. The preload applying member presses the outer rings in a direction in which the outer rings come closer to each other, and a gap is formed between the outer rings.

FIG.4

**Description**

Field

The present invention relates to a power transmission device.

Background

As a type of an electric power steering device, exemplified is an electric power steering device of rack-assist type. An electric power steering device of rack-assist type according to Patent Literature 1 includes a power transmission device for transmitting power of an electric motor to a rack. The power transmission device according to Patent Literature 1 includes a ball screw device for converting rotational motion of the motor into rectilinear motion the rack. The ball screw device includes a screw shaft that is formed integrally with the rack, a nut passing through the screw shaft, and a plurality of balls disposed between a first groove of the screw shaft and a second groove of the nut. The power transmission device according to Patent Literature 1 further includes a double-row bearing supporting the nut.

Citation List

Patent Literature

Patent Literature 1: Japanese Patent Application Laid-open No. 2018-70117 A

Summary

Technical Problem

In a case in which a moment load is input to the bearing, the moment load acts on the ball screw device disposed on an inner peripheral side of the bearing as a reaction. The bearing according to Patent Literature 1 has a configuration of back-to-back combination in which a distance between working points is large, and has high rigidity against a moment load. That is, the moment load input to the ball screw device as a reaction is also large. The ball screw device is a component specialized in an axial load, so that it is not preferable that a large moment load is input thereto because a strange sound may be caused.

The present disclosure is made in view of the aforementioned problem, and provides a power transmission device that can reduce a moment load input to a ball screw device while applying a stable preload to a raceway ring.

Solution to Problem

To achieve the above object, a power transmission device according to an embodiment of the present disclosure comprising: a housing; a ball screw device including a nut housed in the housing, a screw shaft passing through the nut, and balls disposed between the nut and the screw shaft; a first bearing and a second bearing that are disposed to be adjacent to each other in a center axis direction parallel with a center axis of the nut to be a face-to-face combination between the housing and the nut; and a preload applying member configured to apply preloads to the first bearing and the second bearing, wherein the first bearing and the second bearing respectively comprise outer rings that are fitted to the housing and separated from each other in the center axis direction, and the preload applying member presses the outer rings in a direction in which the outer rings come closer to each other, and a gap is formed between the outer rings.

When the outer ring has a dimensional error in the center axis direction, the dimensional error enters a gap between outer rings to be absorbed. Thus, the outer ring is not displaced in the center axis direction, and only a load caused by pressing force of the preload applying member acts on rolling elements is. As a result, a predetermined preload amount is achieved, and a stable preload can be applied to the raceway ring. The first bearing and the second bearing have a configuration of face-to-face combination in which a distance between working points is small. That is, rigidity of the first bearing and the second bearing against a moment load is low. Thus, the moment load input to the ball screw device is reduced, and a strange sound is prevented from being caused.

The power transmission device according to a desirable embodiment further comprising: one inner ring including a first inner ring raceway surface on which a rolling element rolls between the inner ring and the outer ring of the first bearing, and a second inner ring raceway surface on which a rolling element rolls between the inner ring and the outer ring of the second bearing. Due to this, the number of components is reduced, and assembling man-hours are reduced.

The power transmission device according to a desirable embodiment, wherein two inner ring raceway surfaces are formed on an outer peripheral surface of the nut, the inner ring raceway surfaces subjected to hardening treatment on which rolling elements roll. Accordingly, the inner ring is not required, and the power transmission device can be downsized in a radial direction. A surface of the inner ring raceway surface has predetermined hardness, and durability thereof is improved.

The power transmission device according to a desirable embodiment, wherein a groove for grease that is recessed radially inward is formed on an outer peripheral surface of the outer ring. Due to this, a larger amount of grease is secured, a sliding property of the outer ring is improved, and frictional heat is hardly generated. Accordingly, it can be prevented that the outer ring thermally expands and the preload amount varies.

The power transmission device according to a desirable embodiment, wherein an O-ring is interposed between an outer peripheral surface of the outer ring and the housing. Vibration of the outer ring in the radial direction is absorbed by the O-ring, and what is called a rattling sound is prevented from being caused.

The power transmission device according to a desirable embodiment, wherein a cylindrical buffer is interposed between an outer peripheral surface of the outer ring and the housing, and the outer peripheral surface of the outer ring is covered by the buffer. The buffer can absorb large vibration that cannot be sufficiently absorbed by the O-ring, and what is called a rattling sound can be securely prevented from being caused.

The power transmission device according to a desirable embodiment, wherein the preload applying member is an elastic body made of a metallic material, and the outer ring includes a projection that projects from an end face and is interposed between the housing and the preload applying member. Due to this, the elastic body made of a metallic material is brought into contact with the projection. Accordingly, it can be prevented that the elastic body made of a metallic material is brought into contact with the housing and the housing is worn.

The power transmission device according to a desirable embodiment, wherein an inner circumference sealing member is disposed in any one of the first bearing and the second bearing, the inner circumference sealing member being configured to close a space between an inner peripheral surface of the outer ring and an opposing surface opposed to the inner peripheral surface of the outer ring. Due to this, foreign substances hardly enter the first bearing or the second bearing.

The power transmission device according to a desirable embodiment, wherein the inner circumference sealing member comprises: a cored bar for inner circumference sealing disposed on an inner peripheral side of the outer ring; and an elastic body for inner circumference sealing supported by the cored bar for inner circumference sealing and configured to be in slidably contact with the opposing surface, the preload applying member comprises: an elastic body for preloading configured to generate a preload; and a cored bar for preloading supporting the elastic body for preloading, and the cored bar for inner circumference sealing includes an inner circumference engagement part engaging with the inner peripheral surface of the outer ring, and is integrated with the cored bar for preloading. Due to this, by performing work of fitting the cored bar for inner circumference sealing to the inner peripheral side of the outer ring, two components including the inner circumference sealing member and the preload applying member can be assembled with each other. Accordingly, man-hours for assembling work are reduced.

The power transmission device according to a desirable embodiment, comprising: an elastic body for outer circumference sealing configured to close a space between an outer peripheral surface of the outer ring and an inner peripheral surface of the housing, wherein the elastic body for outer circumference sealing is fixed to an outer peripheral surface of the cored bar for preloading and in slidably contact with the inner peripheral surface of the housing. The elastic body for outer circumference sealing can prevent grease from leaking out from between the housing and the outer ring, and the sliding property of the outer ring can be secured. Furthermore, vibration of the outer ring in the radial direction is absorbed by the elastic body for outer circumference sealing, and what is called a rattling sound is prevented from being caused. Additionally, by performing work of fitting the cored bar for inner circumference sealing to the inner peripheral side of the outer ring, three components including the inner circumference sealing member, the preload applying member, and the elastic body for outer circumference sealing can be assembled with each other, and man-hours for assembling work are reduced.

The power transmission device according to a desirable embodiment, comprising: a cored bar fixed to any one of the outer rings of the first bearing and the second bearing; and an elastic body for inner circumference sealing supported by the cored bar and configured to close an inner peripheral side of the outer ring, wherein the cored bar includes a cylindrical outer circumference engagement part engaging with an outer peripheral surface of the outer ring, and a recessed part is formed on the outer peripheral surface of the outer ring, the recessed part being recessed radially inward and housing the outer circumference engagement part. Accordingly, the outer circumference engagement part is housed in the recessed part, and it is possible to prevent the outer circumference engagement part from abutting on the housing to hinder sliding movement of the outer ring.

The power transmission device according to a desirable embodiment, comprising: an elastic body for outer circumference sealing configured to close a space between the outer peripheral surface of the outer ring and an inner peripheral surface of the housing, wherein the elastic body for outer circumference sealing is fixed to an outer peripheral surface of the outer circumference engagement part and in slidably contact with the inner peripheral surface of the housing. The elastic body for outer circumference sealing can prevent grease from leaking out from between the housing and the outer ring, and a sliding property of the outer ring can be secured. Furthermore, vibration of the outer ring in the radial direction is absorbed by the elastic body for outer circumference sealing, and what is called a rattling sound is prevented from being caused. Additionally, when the cored bar is assembled with the outer ring, the elastic body for outer circumference sealing is also assembled therewith, so that man-hours for assembling work are reduced.

The power transmission device according to a desirable embodiment, comprising: a high load absorbing part interposed between the preload applying member and the outer ring to absorb a high load in the center axis direction, wherein a cross-sectional area of the preload applying member cut along the center axis direction is smaller than a cross-sectional area of the high load absorbing part. Accordingly, in a case of assembling the high load absorbing part with the preload applying member, the preload applying member is deformed to press the outer ring, and applies a preload to the bearing. On the other hand, in a case in which a high load acts on the ball screw device, the high load absorbing part absorbs the load. Thus, the preload applying member is prevented from being ruptured due to a high load acting thereon.

The power transmission device according to a desirable embodiment, wherein the preload applying member includes a plurality of projections that are disposed to be separated from each other in a circumferential direction. With this configuration, the preload amount of the preload applying member can be adjusted by changing the number of the projections.

Advantageous Effects of Invention

The power transmission device according to the present disclosure can reduce a moment load input to a ball screw device while applying a stable preload to a raceway ring.

Brief Description of Drawings

FIG. 1 is a schematic diagram of an electric power steering device including a power transmission device according to a first embodiment.
FIG. 2 is a front view of a rack according to the first embodiment.
FIG. 3 is a cross-sectional view of the power transmission device according to the first embodiment.
FIG. 4 is a cross-sectional view of enlarging the periphery of the bearing in FIG. 3.
FIG. 5 is a cross-sectional view for explaining extension lines at contact angles of a first bearing and a second bearing.
FIG. 6 is a cross-sectional view of a power transmission device according to a first modification.
FIG. 7 is a cross-sectional view of a power transmission device according to a second modification.
FIG. 8 is a cross-sectional view of a power transmission device according to a second embodiment.
FIG. 9 is a cross-sectional view of a power transmission device according to a third embodiment.
FIG. 10 is a cross-sectional view of a power transmission device according to a fourth embodiment.
FIG. 11 is a cross-sectional view of a power transmission device according to a fifth embodiment.
FIG. 12 is a cross-sectional view of a power transmission device according to a third modification.
FIG. 13 is a cross-sectional view of a power transmission device according to a sixth embodiment.
FIG. 14 is a cross-sectional view of a power transmission device according to a seventh embodiment.
FIG. 15 is a cross-sectional view of a power transmission device according to an eighth embodiment.
FIG. 16 is a cross-sectional view of a power transmission device according to a ninth embodiment.
FIG. 17 is a schematic diagram extracting only a preload applying member and a high load absorbing part from FIG. 16, which is viewed from a center axis direction. Description of Embodiments

The following describes the present invention in detail with reference to the drawings. The following modes for carrying out the invention (hereinafter referred to as embodiments) do not limit the present invention. Constituent elements in the following embodiments include a constituent element that is easily conceivable by those skilled in the art, substantially the same constituent element, and what is called an equivalent. Furthermore, constituent elements disclosed in the following embodiments can be appropriately combined with each other.

(First embodiment)

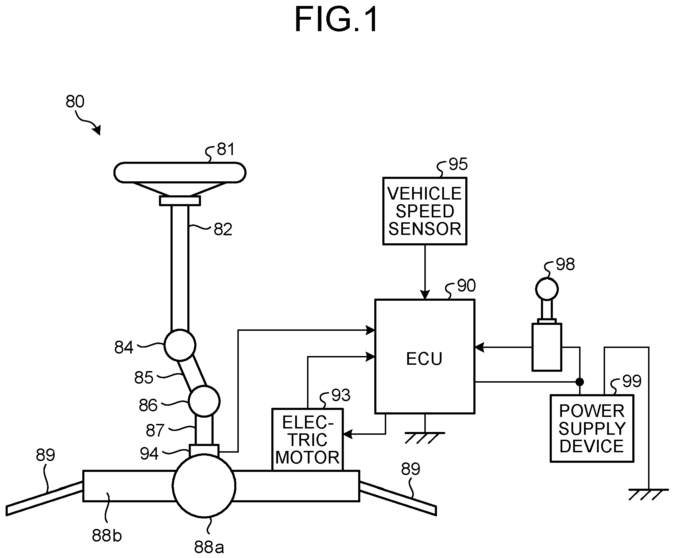

FIG. 1 is a schematic diagram of an electric power steering device including a ball screw device according to a first embodiment. As illustrated in FIG. 1, an electric power steering device 80 includes a steering wheel 81, a steering shaft 82, a universal joint 84, a lower shaft 85, a universal joint 86, a pinion shaft 87, a pinion 88a, and a rack 88b.

The steering wheel 81 is coupled to the steering shaft 82. One end of the steering shaft 82 is coupled to the steering wheel 81. The other end of the steering shaft 82 is coupled to the universal joint 84. One end of the lower shaft 85 is coupled to the steering shaft 82 via the universal joint 84. The other end of the lower shaft 85 is coupled to the pinion shaft 87 via the universal joint 86. The pinion shaft 87 is coupled to the pinion 88a. The pinion 88a engages with the rack 88b. When the pinion 88a rotates, the rack 88b moves in a vehicle width direction of a vehicle. The pinion 88a and the rack 88b convert rotational motion transmitted to the pinion shaft 87 into rectilinear motion. Tie rods 89 are coupled to both ends of the rack 88b. An angle of a wheel is changed when the rack 88b moves. Alternatively, an operation of the steering wheel 81 may be converted into an electric signal, and the angle of the wheel may be changed by the electric signal. That is, a steer-by-wire system may be applied to the electric power steering device 80.

The electric power steering device 80 also includes an electric motor 93, a torque sensor 94, and an electronic control unit (ECU) 90. The electric motor 93 is, for example, a brushless motor, but may be a motor including a brush (slider) and a commutator. The electric motor 93 is disposed in a housing 100 that is described later. The torque sensor 94 is, for example, attached to the pinion 88a. The torque sensor 94 outputs steering torque, which is transmitted to the pinion 88a, to the ECU 90 by controller area network (CAN) communication. A vehicle speed sensor 95 detects a traveling speed (vehicle speed) of a vehicle on which the electric power steering device 80 is mounted. The vehicle speed sensor 95 is provided to a vehicle body, and outputs the traveling speed (vehicle speed) to the ECU 90 by CAN communication. The electric motor 93, the torque sensor 94, and the vehicle speed sensor 95 are electrically connected to the ECU 90.

The ECU 90 controls an operation of the electric motor 93. The ECU 90 acquires signals from the torque sensor 94 and the vehicle speed sensor 95, respectively. In a state in which an ignition switch 98 is turned on, electric power is supplied to the ECU 90 from a power supply device 99 (for example, an on-board battery). The ECU 90 calculates an auxiliary steering command value based on the steering torque and the vehicle speed. The ECU 90 adjusts a power value supplied to the electric motor 93 based on the auxiliary steering command value. The ECU 90 acquires, from the electric motor 93, information on an induced voltage or information output from a resolver and the like disposed in the electric motor 93.

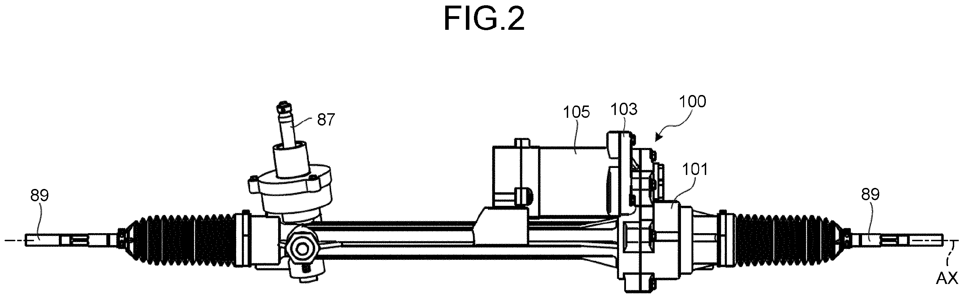

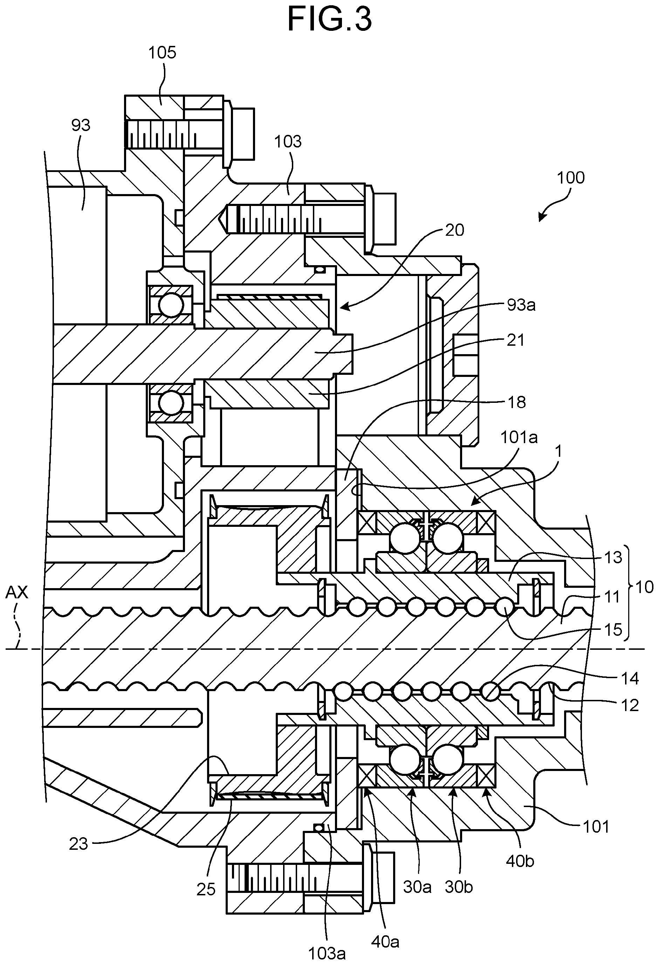

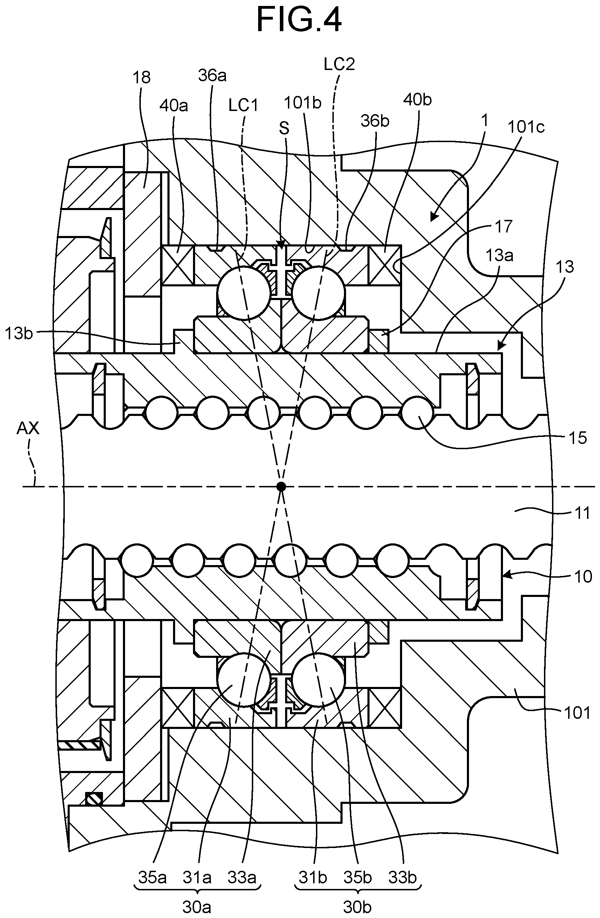

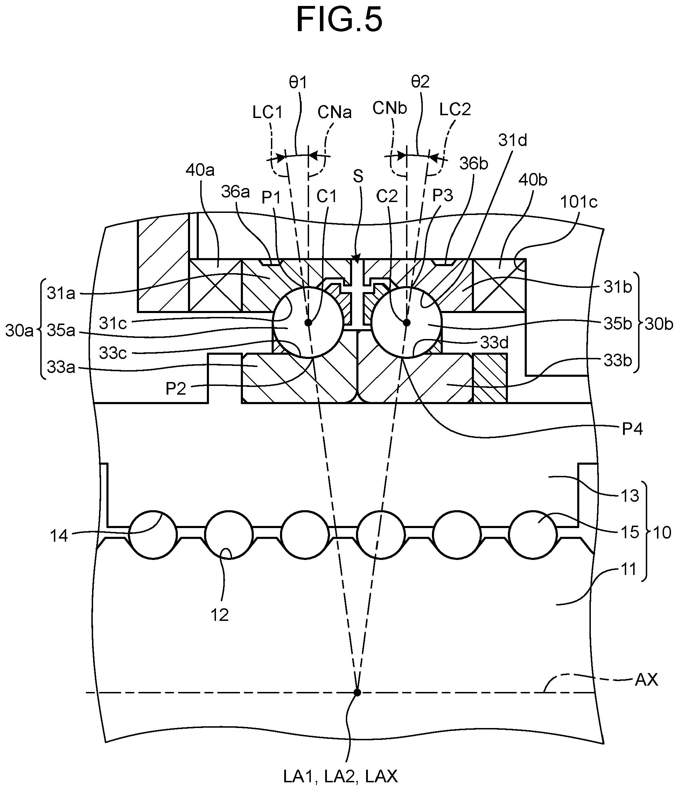

FIG. 2 is a front view of the rack according to the first embodiment. FIG. 3 is a cross-sectional view of the power transmission device according to the first embodiment. FIG. 4 is a cross-sectional view of enlarging the periphery of the bearing in FIG. 3. FIG. 5 is a cross-sectional view for explaining extension lines at contact angles of a first bearing and a second bearing. As illustrated in FIG. 2, the housing 100 is a cylindrical component extending in the vehicle width direction. The housing 100 is made of a light metal such as an aluminum alloy or a magnesium alloy, for example. The housing 100 includes a first main body 101, a second main body 103, and a third main body 105. The first main body 101, the second main body 103, and the third main body 105 are fastened and integrated with each other by bolts.

As illustrated in FIG. 3, a power transmission device 1 is housed in the first main body 101. A pulley device 20 is housed in the second main body 103. The electric motor 93 is housed in the third main body 105.

The power transmission device 1 includes the first main body 101 of the housing 100, a ball screw device 10, a plate 18, a first bearing 30a, a second bearing 30b, and preload applying members 40a and 40b. The ball screw device 10 includes a screw shaft 11, a nut 13, and balls 15.

A second screw groove 12 is formed on an outer peripheral surface of the screw shaft 11. The screw shaft 11 extends in the vehicle width direction, and passes through the nut 13. The screw shaft 11 is a part of the rack 88b. That is, the screw shaft 11 is integrated with the rack 88b.

A first screw groove 14 is formed on an inner peripheral surface of the nut 13. The nut 13 is supported by the first bearing 30a and the second bearing 30b, and is rotatable about the center axis AX. A plurality of the balls 15 are disposed between the first screw groove 14 of the nut 13 and the second screw groove 12 of the screw shaft 11. The ball 15 endlessly circulates through a rolling path formed by the first screw groove 14 of the nut 13 and the second screw groove 12 of the screw shaft 11. Thus, when the nut 13 rotates, the screw shaft 11 (rack 88b) moves in the vehicle width direction. Due to this, rotational motion is converted into rectilinear motion of the rack 88b.

In the following description, a direction parallel with the center axis AX of the nut 13 is referred to as a center axis AX direction. A direction in which the second main body 103 is disposed when viewed from an inner part of the first main body 101 in the center axis AX direction is referred to as a first direction side of the center axis AX direction (a left side of FIG. 3), and a direction opposite to the direction in which the second main body 103 is disposed is referred to as a second direction side (a right side of FIG. 3). A direction orthogonal to the center axis AX is simply referred to as a radial direction. The radial direction is a direction that is also called a radiation direction.

The pulley device 20 transmits power of the electric motor 93 to the nut 13. The pulley device 20 includes a driving pulley 21, a driven pulley 23, and a belt 25. The driving pulley 21 is fixed to an output shaft 93a of the electric motor 93. The driven pulley 23 is fixed to the nut 13, and rotates integrally with the nut 13. The belt 25 is an endless belt, and wound around the driving pulley 21 and the driven pulley 23.

With the configuration described above, when the electric motor 93 is driven and rotated, power generated in the electric motor 93 is transmitted to the nut 13 via the pulley device 20. The nut 13 supported by the first bearing 30a and the second bearing 30b then rotates. When the nut 13 rotates, force in the axial direction acts on the rack 88b (screw shaft 11). Accordingly, force of the pinion 88a (steering wheel 81) required for moving the rack 88b is reduced. That is, the electric power steering device 80 is a rack-assist type device.

The plate 18 is an annular component for preventing the first bearing 30a, the second bearing 30b, and the preload applying members 40a and 40b from coming out from the inner part of the first main body 101. The plate 18 is housed in a recessed part 101a that is formed on an end face of the first main body 101 facing the first direction side. A projection 103a projecting from an end face of the second main body 103 facing the second direction side abuts on the plate 18, and the plate 18 is regulated not to come off from the recessed part 101a.

As illustrated in FIG. 4, each of the first bearing 30a and the second bearing 30b is an angular ball bearing. The first bearing 30a and the second bearing 30b are disposed between the first main body 101 and the nut 13. The first bearing 30a and the second bearing 30b are disposed to be adjacent to each other in the center axis AX direction. The first bearing 30a and the second bearing 30b are configured to be a face-to-face combination. The first bearing 30a and the second bearing 30b respectively include outer rings 31a and 31b, inner rings 33a and 33b, and a plurality of rolling elements 35a and 35b.

The outer rings 31a and 31b are fitted to an inner peripheral surface 101b of the first main body 101. Specifically, the outer rings 31a and 31b are loosely fit to the inner peripheral surface 101b of the first main body 101. Thus, the outer rings 31a and 31b can freely slide in the center axis AX direction with respect to the inner peripheral surface 101b. The outer rings 31a and 31b are pressed to come closer to each other by the preload applying members 40a and 40b. Specifically, the outer ring 31a is pressed toward the second direction side by the preload applying member 40a. The outer ring 31b is pressed toward the first direction side by the preload applying member 40b. Due to this, as illustrated in FIG. 5, in the first bearing 30a, the rolling elements 35a are brought into contact with an outer ring raceway surface 31c and an inner ring raceway surface 33c, and a preload is applied to the first bearing 30a. Similarly, in the second bearing 30b, the rolling elements 35b are brought into contact with an outer ring raceway surface 31d and an inner ring raceway surface 33d, and a preload is applied to the second bearing 30b. Loads caused by pressing force of the preload applying members 40a and 40b act on the rolling elements 35a and 35b, and an internal gap is in a negative state. In the present embodiment, the outer rings 31a and 31b are loosely fit to the inner peripheral surface 101b of the first main body 101, but it is sufficient that the outer rings 31a and 31b can slide with respect to the housing 100. An inner diameter of the inner peripheral surface 101b of the first main body 101 may be equal to outer diameters of the outer rings 31a and 31b.

As illustrated in FIG. 4, the outer rings 31a and 31b are separated from each other in the center axis AX direction in a state in which preloads are applied thereto. In other words, a gap S is formed between the outer rings 31a and 31b. Due to this, if there is a dimensional error in an external shape of the outer ring 31a such that the outer ring 31a is formed to be larger than a predetermined size toward the outer ring 31b side in the center axis AX direction, the dimensional error is absorbed by the gap S, and the outer ring 31a is not brought into contact with the outer ring 31b. On the other hand, in a case in which there is a dimensional error in the external shape of the outer ring 31a such that the outer ring 31a is formed to be smaller than the predetermined size toward the outer ring 31b side in the center axis AX direction, the gap S is enlarged, and a position of the other outer ring 31b is not displaced. Thus, it is possible to avoid a situation such that the outer rings 31a and 31b are brought into contact with each other, the outer ring raceway surfaces 31c and 31d are displaced, and the loads acting on the rolling elements 35a and 35b vary. Furthermore, in a case in which the external shape of the outer ring 31a is formed to be larger or smaller than the predetermined size toward a side opposite to the outer ring 31b in the center axis AX direction, the dimensional error is absorbed by the preload applying member 40a, so that the outer ring raceway surface 31c is not displaced in the center axis AX direction. Due to this, the loads of the preload applying members 40a and 40b acting on the rolling elements 35a and 35b do not vary, so that the preload amount becomes a predetermined amount. That is, the preload amount applied to the first bearing 30a and the second bearing 30b is only pressing force of the preload applying members 40a and 40b, and becomes a constant-pressure preload.

Grease is applied between outer peripheral surfaces of the outer rings 31a and 31b and the inner peripheral surface 101b. Grooves 36a and 36b for grease that are recessed radially inward and extend in a circumferential direction are formed on outer peripheral surfaces of the outer rings 31a and 31b. Grease is held inside the grooves 36a and 36b for grease. Thus, a larger amount of grease is interposed between the outer peripheral surfaces of the outer rings 31a and 31b and the inner peripheral surface 101b. That is, the outer rings 31a and 31b can easily slide with respect to the inner peripheral surface 101b, and frictional heat is hardly generated. Due to this, it is prevented that the outer rings 31a and 31b thermally expand and the preload amount varies. To prevent the outer rings 31a and 31b from rotating about the center axis AX with respect to the inner peripheral surface 101b (what is called creeping), key grooves can be disposed on the outer peripheral surfaces or end faces of the outer rings 31a and 31b, or the outer rings 31a and 31b can be pinned.

The outer ring raceway surfaces 31c and 31d are formed on the inner peripheral surfaces of the outer rings 31a and 31b, respectively. On the inner peripheral surfaces of the outer rings 31a and 31b and inner sides of the outer ring raceway surfaces 31c and 31d, grooves are formed, the grooves on which claw parts of retainers that retain the rolling elements 35a and 35b are hooked.

The inner rings 33a and 33b are engaged with an outer peripheral surface 13a of the nut 13. Thus, the inner rings 33a and 33b rotate about the center axis AX together with the nut. An end face of the inner ring 33a abuts on a wall part 13b of the nut 13, and an end face of the inner ring 33b abuts on a positioning member 17. The inner ring 33a and the inner ring 33b are positioned in the center axis AX direction by the positioning member 17 and the wall part 13b of the nut 13. The positioning member 17 is called a locknut.

The rolling elements 35a and 35b are balls. As illustrated in FIG. 5, the rolling elements 35a are disposed between the outer ring 31a and the inner ring 33a, and in contact with the outer ring raceway surface 31c of the outer ring 31a and the inner ring raceway surface 33c of the inner ring 33a. A virtual line orthogonal to the center axis AX and passing through a center C1 of each rolling element 35a is referred to as a reference line CNa. An extension line of a virtual line connecting a point of contact P1 between the rolling element 35a and the outer ring raceway surface 31c to a point of contact P2 between the rolling element 35a and the inner ring raceway surface 33c is referred to as an extension line LC1 at the contact angle of the first bearing 30a. The extension line LC1 at the contact angle of the first bearing 30a is inclined with respect to the reference line CNa. That is, the extension line LC1 is inclined to be positioned on the second direction side of the center axis AX direction toward an inner side in the radial direction, and the contact angle formed by the extension line LC1 and the reference line CNa is $\theta 1$.

The rolling elements 35b are disposed between the outer ring 31b and the inner ring 33b, and in contact with the outer ring raceway surface 31d of the outer ring 31b and the inner ring raceway surface 33d of the inner ring 33b. A virtual line orthogonal to the center axis AX and passing through a center C2 of each rolling element 35b is referred to as a reference line CNb. An extension line of a virtual line connecting a point of contact P3 between the rolling element 35b and the outer ring raceway surface 31d to a point of contact P4 between the rolling element 35b and the inner ring raceway surface 33d is referred to as an extension line LC2 at the contact angle of the second bearing 30b. The extension line LC2 at the contact angle of the second bearing 30b is inclined with respect to the reference line CNa. That is, the extension line LC2 is inclined to be positioned on the first direction side of the center axis AX direction toward the inner side in the radial direction, and the contact angle formed by the extension line LC2 and the reference line CNb is $\theta 2$.

With such a configuration of face-to-face combination, the extension line LC1 at the contact angle of the first bearing 30a and the extension line LC2 at the contact angle of the second bearing 30b come closer to each other as approaching the center axis AX. That is, a distance between an intersection point LA1 at the extension line LC1 of the contact angle of the first bearing 30a and the center axis AX (a working point of the first bearing 30a) and an intersection point LA2 of the extension line LC2 at the contact angle of the second bearing 30b and the center axis AX (a working point of the second bearing 30b) is shorter than that in a case in which the first bearing 30a and the second bearing 30b are disposed in back-to-back combination. Thus, the rigidity of the first bearing 30a and the second bearing 30b against a moment load is low.

In the present embodiment, the intersection point LA1 at the extension line LC1 of the contact angle of the first bearing 30a and the center axis AX agrees with the intersection point LA2 of the extension line LC2 at the contact angle of the second bearing 30b and the center axis AX. That is, on the center axis AX, a distance between the working points including the intersection point LA1 and the intersection point LA2 is zero. With this configuration, the first bearing 30a and the second bearing 30b support the ball screw device 10 substantially at one intersection point LAx. Due to this, the rigidity of the first bearing 30a and the second bearing 30b against a moment load is extremely low. Thus, while the vehicle is traveling, even if a moment load is input to the first bearing 30a and the second bearing 30b, a moment load input to the ball screw device 10 as a reaction is largely reduced. Accordingly, a strange sound can be prevented from being caused in the ball screw device 10 due to an input of the moment load.

The preload applying members 40a and 40b are constituted of elastic bodies, which are ring-shaped pieces of rubber centered on the center axis AX. The preload applying member 40a is disposed between the outer ring 31a of the first bearing 30a and the plate 18. The preload applying member 40b is disposed between the outer ring 31b of the second bearing 30b and a stepped surface 101c of the first main body 101. That is, the preload applying members 40a and 40b are disposed on both sides in the center axis AX direction of the first bearing 30a and the second bearing 30b. The preload applying members 40a and 40b are assembled with the power transmission device 1 and subjected to a compressive load in the center axis AX direction, and press the outer rings 31a and 31b of the first bearing 30a and the second bearing 30b, respectively.

The preload applying members 40a and 40b are disposed on both sides in the center axis AX direction of the first bearing 30a and the second bearing 30b. The first bearing 30a and the second bearing 30b can be displaced along the center axis AX direction. Due to this, in a case in which a distance between the plate 18 and the stepped surface 101c in the center axis AX direction is not a predetermined length, in other words, in a case in which there is a manufacturing error in the first main body 101 and the second main body of the housing 100, the preload applying members 40a and 40b absorb the error. Thus, if there is a manufacturing error in the first main body 101 and the second main body of the housing 100, the preload amount of the first bearing 30a and the second bearing 30b does not vary. In a case in which a large impact load acts on the rack 88b in the center axis AX direction, the preload applying members 40a and 40b absorb the impact load. Vibration in the center axis AX direction is suppressed around the ball screw device 10 by the preload applying members 40a and 40b, and what is called a rattling sound is reduced.

As described above, the power transmission device 1 includes: the housing 100; the ball screw device 10 including the nut 13 housed in the housing 100, the screw shaft 11 passing through the nut 13, and the balls 15 disposed between the nut 13 and the screw shaft 11; the first bearing 30a and the second bearing 30b that are disposed to be adjacent to each other in the center axis AX direction parallel with the center axis AX of the nut 13 to be a face-to-face combination between the housing 100 and the nut 13; and the preload applying members 40a and 40b that apply preloads to the first bearing 30a and the second bearing 30b. The first bearing 30a and the second bearing 30b respectively include the outer rings 31a and 31b that are fitted to the housing 100 and separated from each other in the center axis AX direction. The preload applying members 40a and 40b press the outer rings 31a and 31b in a direction in which the outer rings 31a and 31b come closer to each other, and the gap S is formed between the outer rings 31a and 31b.

If there is a dimensional error in the outer rings 31a and 31b in the center axis AX direction, the gap S between the outer rings 31a and 31b is changed, or the preload applying members 40a and 40b are deformed, and thereby the dimensional error is absorbed. Thus, the outer ring raceway surfaces 31c and 31d are not displaced in the center axis AX direction, only the loads caused by pressing force of the preload applying members 40a and 40b act on the rolling elements 35a and 35b, and becomes a predetermined preload amount. Accordingly, bearing torque can be stabilized. The first bearing 30a and the second bearing 30b have a configuration of face-to-face combination in which the distance between the working points is small. That is, the first bearing 30a and the second bearing 30b each have low rigidity against a moment load. Thus, the moment load input to the ball screw device 10 is reduced, and a strange sound is prevented from being caused.

The grooves 36a and 36b for grease that are recessed radially inward are formed on outer peripheral surfaces of the outer rings 31a and 31b of the power transmission device 1. Due to this, a larger amount of grease is secured, sliding properties of the outer rings 31a and 31b are improved, and frictional heat is hardly generated. Thus, it can be prevented that the outer rings 31a and 31b thermally expand and the preload amount varies.

In the power transmission device, the preload applying members 40a and 40b are disposed on both sides of the first bearing and the second bearing. Due to this, a manufacturing error in the housing 100 in the center axis AX direction is absorbed by the preload applying members 40a and 40b, and the preload amount is prevented from varying.

In the first embodiment, the intersection point LA1 of the extension line LC1 at the contact angle of the first bearing 30a and the center axis AX agrees with the intersection point LA2 of the extension line LC2 at the contact angle of the second bearing 30b and the center axis AX, but the embodiment is not limited thereto. The following describes a first modification and a second modification in which the intersection point LA1 does not agree with the intersection point LA2.

(First modification)

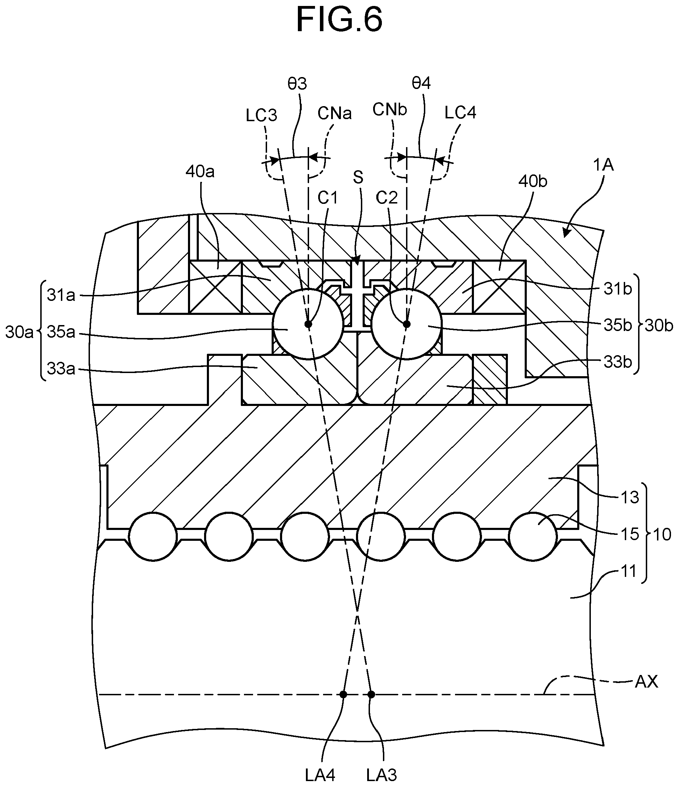

FIG. 6 is a cross-sectional view of the power transmission device according to the first modification. In the following description, the same constituent element as that in the embodiment described above is denoted by the same reference numeral, and redundant description will be omitted.

A power transmission device 1A according to the first modification is different from the power transmission device 1 according to the first embodiment in the following points. In the power transmission device 1A according to the first modification, a contact angle formed by the reference line CNa and an extension line LC3 at the contact angle of the first bearing 30a is θ3. In the power transmission device 1A according to the first modification, a contact angle formed by the reference line CNb and an extension line LC4 at the contact angle of the second bearing 30b is θ4.

Specifically, the contact angle θ3 formed by the reference line CNa and the extension line LC3 at the contact angle of the first bearing 30a is larger than the contact angle θ1 in the first embodiment. Additionally, the contact angle θ4 formed by the reference line CNb and the extension line LC4 at the contact angle of the second bearing 30b is larger than the contact angle θ2 in the first embodiment. Due to this, the extension line LC3 at the contact angle of the first bearing 30a and the extension line LC4 at the contact angle of the second bearing 30b come closer to each other as approaching the center axis AX from the centers C1 and C2 of the rolling elements 35a and 35b, and intersect with each other before reaching the center axis AX. After intersecting with each other, the extension lines LC3 and LC4 are separated from each other as approaching the center axis AX. An intersection point LA3 of the extension line LC3 at the contact angle of the first bearing 30a and the center axis AX (a working point of the first bearing 30a) and an intersection point LA4 of the extension line LC4 at the contact angle of the second bearing 30b and the center axis AX (a working point of the second bearing 30b) are deviated from each other on the center axis AX, and do not agree with each other. Thus, the first bearing 30a and the second bearing 30b support the ball screw device 10 at two points, that is, the intersection point LA3 and the intersection point LA4. Also in such an example, the distance between the working points (a distance between the intersection point LA3 and the intersection point LA4) is shorter than that in the case in which the first bearing 30a and the second bearing 30b are disposed to be a back-to-back combination. Thus, the rigidity against the moment load can be lowered.

(Second modification)

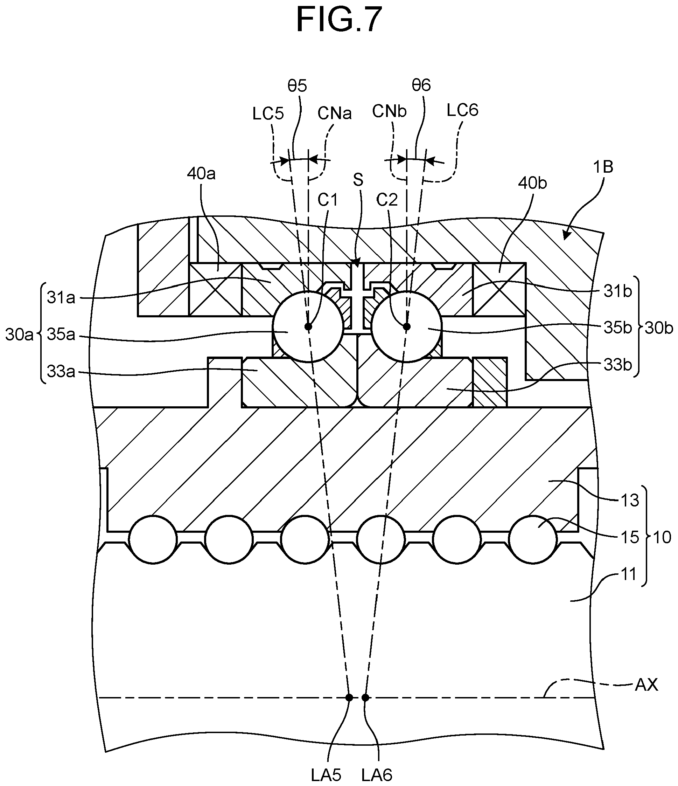

FIG. 7 is a cross-sectional view of the power transmission device according to the second modification. A power transmission device 1B according to the second modification is different from the power transmission device 1 according to the first embodiment in the following points. In the power transmission device 1B according to the second modification, a contact angle formed by the reference line CNa and an extension line LC5 at the contact angle of the first bearing 30a is θ5. In the power transmission device 1B according to the second modification, a contact angle formed by the reference line CNb and an extension line LC6 at the contact angle of the second bearing 30b is θ6.

Specifically, the contact angle θ5 formed by the reference line CNa and the extension line LC5 at the contact angle of the first bearing 30a is smaller than the contact angle θ1 in the first embodiment. Additionally, the contact angle θ6 formed by the reference line CNb and the extension line LC6 at the contact angle of the second bearing 30b is smaller than the contact angle θ2 in the first embodiment. Due to this, the extension line LC5 at the contact angle of the first bearing 30a and the extension line LC6 at the contact angle of the second bearing 30b come closer to each other as approaching the center axis AX from the centers C1 and C2 of the rolling elements 35a and 35b to intersect with the center axis AX, but do not intersect with each other before reaching the center axis AX. That is, the first bearing 30a and the second bearing 30b support the ball screw device 10 at two points, that is, an intersection point LA5 of the extension line LC5 at the contact angle of the first bearing 30a and the center axis AX (a working point of the first bearing 30a) and an intersection point LA6 of the extension line LC6 at the contact angle of the second bearing 30b and the center axis AX (a working point of the second bearing 30b). Also in such an example, the distance between the working points (a distance between the intersection point LA5 and the intersection point LA6) is reduced, and the rigidity against the moment load can be lowered.

(Second embodiment)

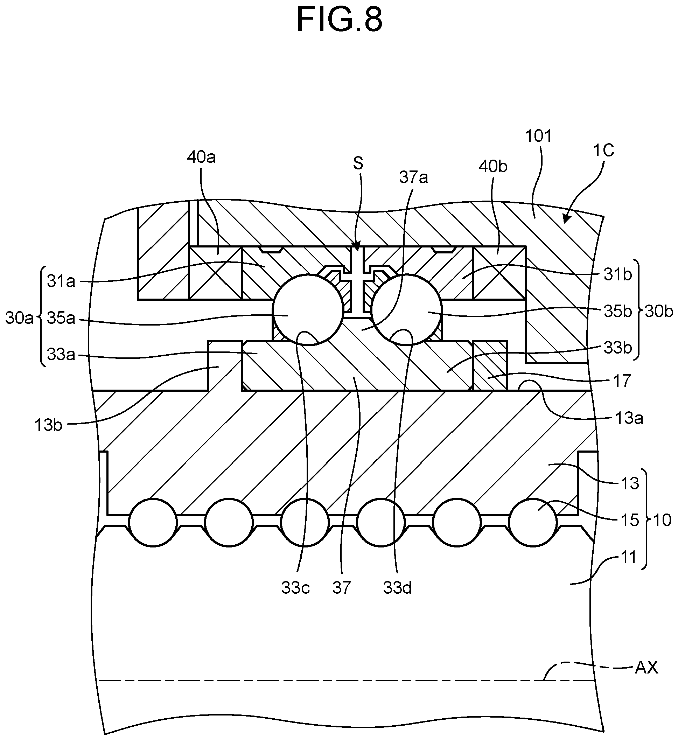

FIG. 8 is a cross-sectional view of the power transmission device according to a second embodiment. A power transmission device 1C according to the second embodiment is different from the power transmission device 1 according to the first embodiment in that the power transmission device 1C includes an integrated inner ring 37 in place of the inner ring 33a of the first bearing 30a and the inner ring 33b of the second bearing 30b.

The inner ring 37 includes inner ring raceway surfaces 33c and 33d as a double row formed on an outer peripheral surface, and a shoulder groove 37a projecting radially outward from between the inner ring raceway surfaces 33c and 33d. The inner ring 37 engages with the outer peripheral surface 13a of the nut 13. An end face of the inner ring 37 on the first direction side is in contact with the wall part 13b of the nut 13. An end face of the inner ring 37 on the second direction side is in contact with the positioning member 17. Thus, the inner ring 37 is positioned in the center axis AX direction by the positioning member 17 and the nut 13. As described above, the power transmission device 1C further includes the one inner ring 37 including the inner ring raceway surface (first inner ring raceway surface) 33c on which the rolling elements 35a roll between the inner ring 37 and the outer ring 31a of the first bearing 30a, and the inner ring raceway surface (second inner ring raceway surface) 33d on which the rolling elements 35b roll between the inner ring 37 and the outer ring 31b of the second bearing 30b. Due to this, the inner rings 33a and 33b are not required to be assembled with the nut 13, and assembling man-hours are reduced.

(Third embodiment)

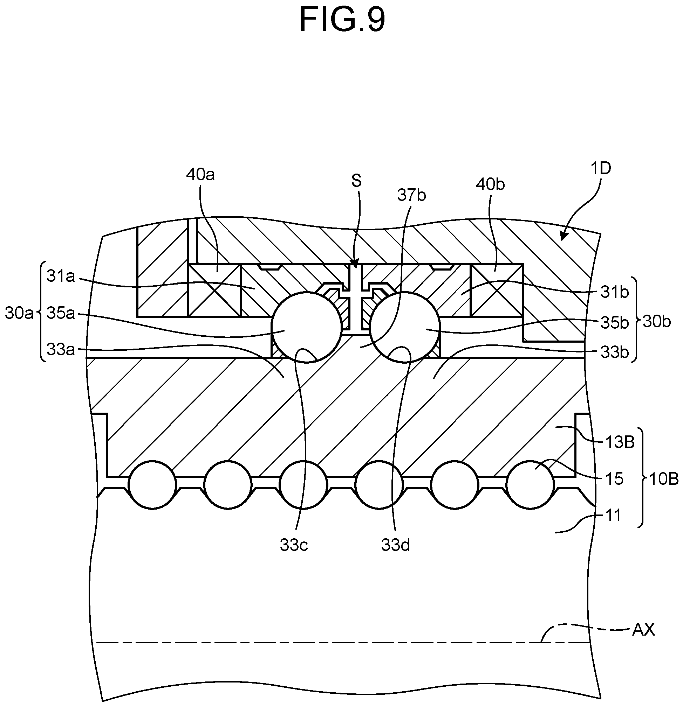

FIG. 9 is a cross-sectional view of the power transmission device according to a third embodiment. A power transmission device 1D according to the third embodiment is different from the power transmission device 1 according to the first embodiment in that the power transmission device 1D includes a nut 13B integrated with the inner rings 33a and 33b. That is, in a ball screw device 10B, the inner ring raceway surfaces 33c and 33d as a double row and a shoulder groove 37b projecting radially outward from between the inner ring raceway surfaces 33c and 33d are formed on an outer peripheral surface 13a of the nut 13B. The inner ring raceway surfaces 33c and 33d are subjected to hardening treatment such as immersion quenching, carburizing treatment, and high-frequency processing.

As described above, in the power transmission device 1D, the two inner ring raceway surfaces 33c and 33d are formed on the outer peripheral surface of the nut 13B, the inner ring raceway surfaces 33c and 33d subjected to hardening treatment on which the rolling elements 35a and 35b roll. Due to this, the inner rings 33a and 33b are not required, so that the power transmission device 1D can be downsized in the radial direction. Surfaces of the inner ring raceway surfaces 33c and 33d are subjected to heat treatment to have predetermined hardness, and durability thereof is improved.

(Fourth embodiment)

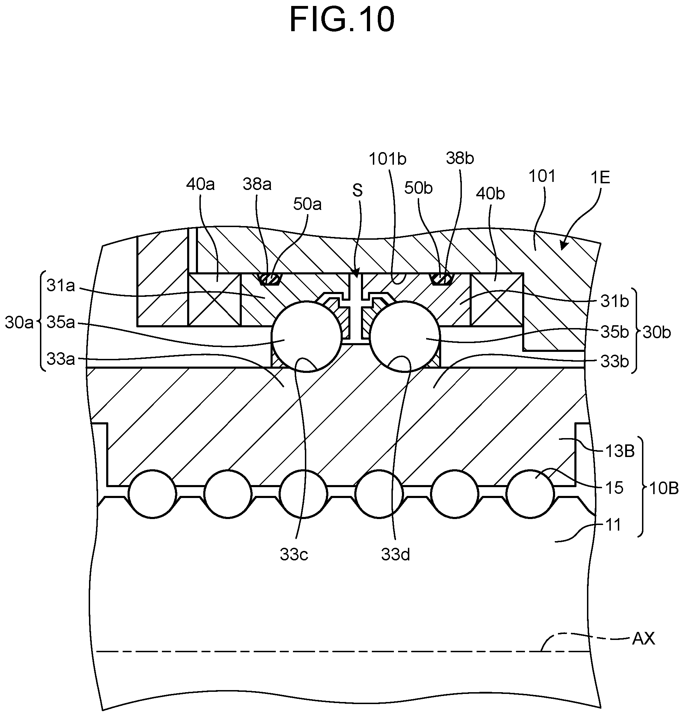

FIG. 10 is a cross-sectional view of the power transmission device according to a fourth embodiment. A power transmission device 1E according to the fourth embodiment is different from the power transmission device 1D according to the third embodiment in the following points. In the power transmission device 1E according to the fourth embodiment, the grooves 36a and 36b for grease are not formed on the outer peripheral surfaces of the outer ring 31a of the first bearing 30a and the outer ring 31b of the second bearing 30b. Alternatively, recessed parts 38a and 38b extending in the circumferential direction are formed on the outer peripheral surfaces of the outer ring 31a of the first bearing 30a and the outer ring 31b of the second bearing 30b. Additionally, O-rings 50a and 50b are interposed between the inner peripheral surface 101b of the first main body 101, and the outer ring 31a of the first bearing 30a and the outer ring 31b of the second bearing 30b, respectively.

The recessed parts 38a and 38b are grooves for respectively housing the O-rings 50a and 50b. Accordingly, when the outer rings 31a and 31b slide in the center axis AX direction, the O-rings 50a and 50b are displaced in the center axis AX direction together with the outer rings 31a and 31b. Outer peripheral parts of the O-rings 50a and 50b project radially outward from the outer peripheral surfaces of the outer rings 31a and 31b, and elastically abut on the inner peripheral surface 101b of the first main body 101.

As described above, in the power transmission device 1E, the O-rings 50a and 50b are interposed between the outer peripheral surfaces of the outer rings 31a and 31b and the housing 100. Due to this, vibration of the ball screw device 10B in the radial direction is absorbed by the O-rings 50a and 50b, and what is called a rattling sound is prevented from being caused.

(Fifth embodiment)

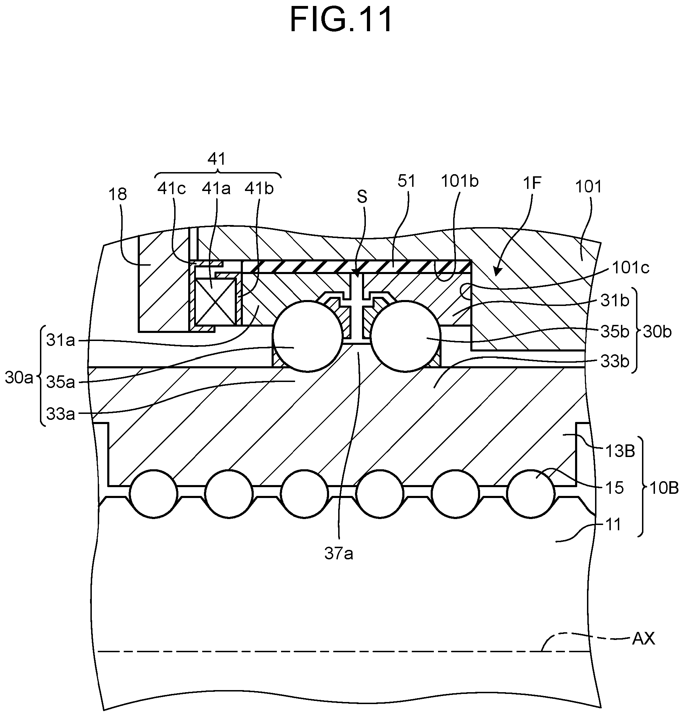

FIG. 11 is a cross-sectional view of the power transmission device according to a fifth embodiment. A power transmission device 1F according to the fifth embodiment is different from the power transmission device 1D according to the third embodiment in the following points. In the power transmission device 1F according to the fifth embodiment, the grooves 36a and 36b for grease are not formed on the outer peripheral surfaces of the outer ring 31a of the first bearing 30a and the outer ring 31b of the second bearing 30b. A cylindrical buffer 51 is disposed on an inner peripheral side of the inner peripheral surface 101b of the first main body 101. Additionally, the power transmission device 1F includes a preload applying member 41 in place of the preload applying members 40a and 40b.

The buffer 51 is a cylindrical component made of rubber or resin. The buffer 51 is fitted to the inner peripheral surface 101b of the first main body 101 and fixed to the first main body 101. The outer ring 31a of the first bearing 30a and the outer ring 31b of the second bearing 30b are loosely fitted to the buffer 51, and can freely slide in the center axis AX direction.

The preload applying member 41 includes a ring-shaped piece of rubber 41a, and cored bars 41b and 41c to which the rubber 41a is vulcanization-bonded. The rubber 41a is compressed in the center axis AX direction, and presses the outer ring 31a of the first bearing 30a. The cored bars 41b and 41c are configured to maintain the shape of the rubber 41a. An outer peripheral part of the cored bar 41c extends radially outward from the rubber 41a, and abuts on the inner peripheral surface 101b of the first main body 101. Thus, the rubber 41a is regulated not to deviate radially outward.

The only one preload applying member 41 is disposed to apply constant-pressure preloads to the first bearing 30a and the second bearing 30b.

As described above, in the power transmission device 1F, the cylindrical buffer 51 is disposed between the outer peripheral surfaces of the outer rings 31a and 31b and the housing 100, and the outer peripheral surfaces of the outer rings 31a and 31b are covered by the buffer 51. The buffer 51 can absorb large vibration that cannot be sufficiently absorbed by the O-ring, and what is called a rattling sound can be securely prevented from being caused.

Constant-pressure preloads are applied to the first bearing 30a and the second bearing 30b by the one preload applying member 41, and the dimension of the power transmission device 1F in the center axis AX direction is reduced to achieve downsizing of the device. Even in a case in which the first bearing 30a or the second bearing 30b has a dimensional error in the center axis AX direction, the preload applying member 41 can absorb the dimensional error to stabilize bearing torque.

(Third modification)

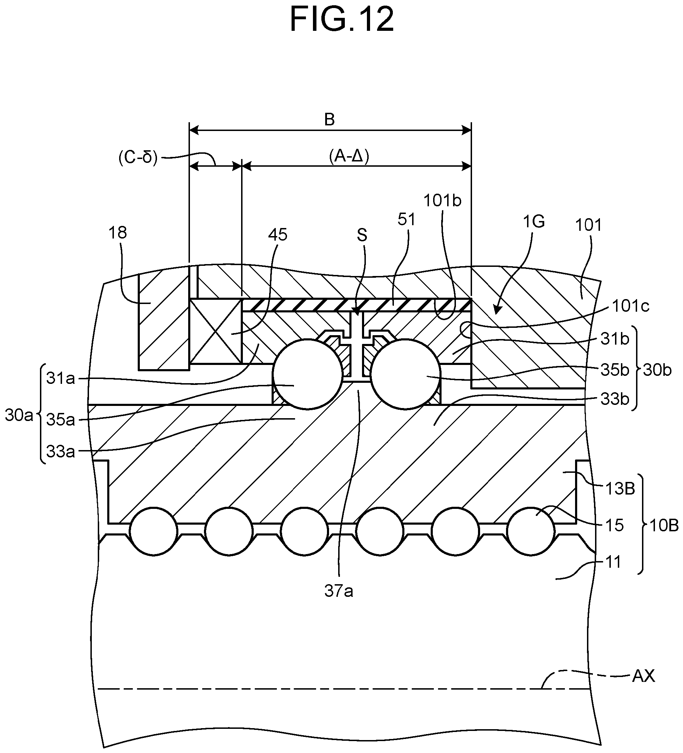

FIG. 12 is a cross-sectional view of the power transmission device according to the third modification. A power transmission device 1G according to the third modification is different from the power transmission device 1F according to the fifth embodiment in that a preload applying member 45 is used in place of the preload applying member 41.

The preload applying member 45 is a spacer the dimension C of which in the center axis AX direction is adjusted. Thus, in the third modification, preloads are applied to the first bearing 30a and the second bearing 30b by fixed-position preloading. Examples of a material of the preload applying member 45 include iron, an aluminum alloy, a magnesium alloy, or resin. The dimension C of the preload applying member 45 in the center axis AX direction is represented by the following expression 1.

$$C = \delta + B - (A - \Delta) \qquad \text{(Expression 1)}$$

In the expression 1, A indicates a dimension in the center axis AX direction in a state in which a preload is not applied to the first bearing 30a and the second bearing 30b. (A - Δ) indicates a dimension in the center axis AX direction in a state in which a preload is applied to the first bearing 30a and the second bearing 30b. B indicates a distance between the stepped surface 101c of the housing 100 and the plate 18. σ indicates an elastic deformation amount generated when a state of not applying a preload by the preload applying member 45 is changed to a state of applying a preload.

With the power transmission device 1G according to the third modification, changes in the preload amount along with temperature changes can be reduced by appropriately selecting a material of the preload applying member 45 as a spacer. More specifically, dimensions of the housing 100 and the outer rings 31a and 31b in the center axis AX direction are increased when they are expanded due to temperature rise. In a case in which the housing 100 is made of an aluminum alloy and the outer rings 31a and 31b are made of bearing steel, if the preload applying member 45 made of iron is selected, an expansion amount of the preload applying member 45 becomes smaller than an expansion amount of the housing 100 because a linear expansion coefficient of the aluminum alloy is larger than that of the iron, so that the preload amount by fixed-position preloading is reduced. Thus, by selecting the preload applying member 45 made of an aluminum alloy that is formed with the same material as that of the housing 100 made of an aluminum alloy, lowering of the preload amount along with temperature changes can be relieved. Due to this, changes in the preload amount can be relieved as compared with a case of selecting the preload applying member 45 made of resin.

(Sixth embodiment)

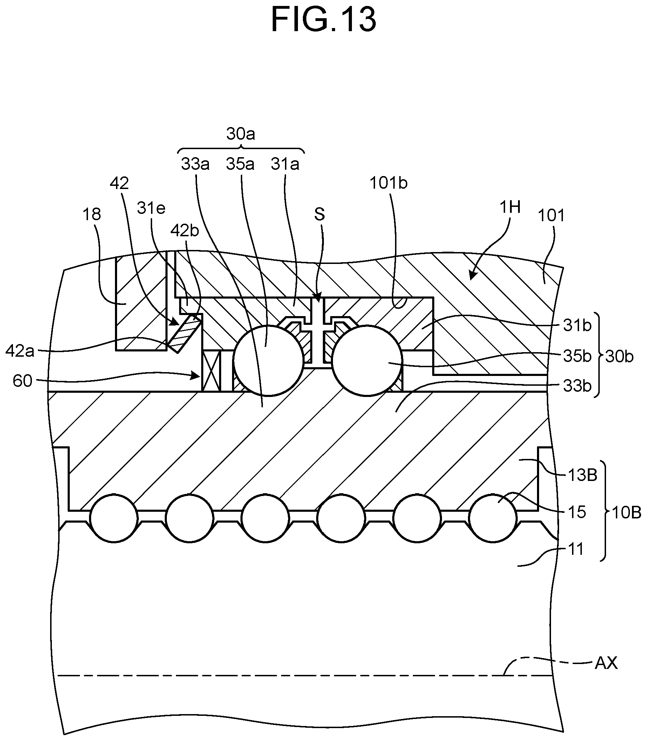

FIG. 13 is a cross-sectional view of the power transmission device according to a sixth embodiment. A power transmission device 1H according to the sixth embodiment is different from the power transmission device 1F according to the fifth embodiment in the following points. The power transmission device 1G according to the sixth embodiment includes a preload applying member 42 in place of the preload applying member 41. A projection 31e is formed on the outer ring 31a of the first bearing 30a. An inner circumference sealing member 60 is disposed on the inner peripheral side of the outer ring 31a of the first bearing 30a.

The preload applying member 42 is an elastic body made of a metallic material. The preload applying member 42 is a coned disc spring that is inclined to be positioned on a radially outer side toward the second direction side of the center axis AX. An end part 42a of the preload applying member 42 on the first direction side abuts on the plate 18. An end part 42b of the preload applying member 42 on the second direction side abuts on the outer ring 31a of the first bearing 30a, and presses the outer ring 31a. As an embodiment, a wave washer may be used in place of the coned disc spring.

The projection 31e projects toward the first direction side from an end face of the outer ring 31a facing the first direction side. The projection 31e is positioned radially outward as compared with the preload applying member 42. The projection 31e is interposed between the inner peripheral surface 101b of the first main body 101 and the preload applying member 42. Thus, the end part 42b of the preload applying member 42 abuts on an inner peripheral surface of the projection 31e.

The inner circumference sealing member 60 is a ring-shaped piece of rubber fitted to the inner peripheral side of the outer ring 31a. An inner end in the radial direction of the inner circumference sealing member 60 is in slidably contact with the outer peripheral surface of the nut 13B.

As described above, in the power transmission device 1H, the preload applying member 42 is an elastic body made of a metallic material, and the outer ring 31a includes the projection 31e that projects from the end face and is interposed between the housing 100 and the preload applying member 42. Due to this, the elastic body made of a metallic material is brought into contact with the projection 31e. Accordingly, it can be prevented that the preload applying member 42 is brought into contact with the housing 100 and the housing 100 is worn.

The power transmission device 1H also includes the inner circumference sealing member 60 that closes a space between the inner peripheral surface of the outer ring 31a of the first bearing 30a and an opposing surface opposed to the inner peripheral surface of the outer ring 31a (the outer peripheral surface 13a of the nut 13B). Due to this, the first direction side of the rolling elements 35a is covered by the inner circumference sealing member 60, and foreign substances hardly enter. Particularly, the pulley device 20 is disposed on the first direction side of the rolling elements 35a. Due to abrasion between meshing parts of the driving pulley 21 and the belt 25 and abrasion between meshing parts of the driven pulley 23 and the belt 25, abrasion powder is generated in some cases. However, with the above configuration, abrasion powder hardly enters the inner part of the first bearing 30a.

(Seventh embodiment)

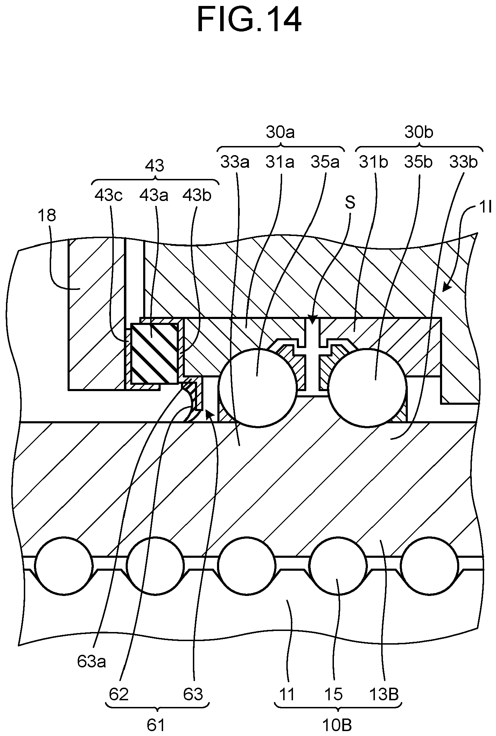

FIG. 14 is a cross-sectional view of the power transmission device according to a seventh embodiment. A power transmission device 1I according to the seventh embodiment is different from the power transmission device 1G according to the sixth embodiment in that the power transmission device 1I includes a preload applying member 43 and an inner circumference sealing member 61 that are integrated with each other in place of the preload applying member 42 and the inner circumference sealing member 60 that are individually formed.

The preload applying member 43 includes an elastic body 43a for preloading made of rubber, and cored bars 43b and 43c for preloading to which the elastic body 43a for preloading is vulcanization-bonded. The inner circumference sealing member 61 includes an elastic body 62 for inner circumference sealing made of rubber that is in slidably contact with the outer peripheral surface of the nut 13B, and a cored bar 63 for inner circumference sealing supporting the elastic body 62 for inner circumference sealing. The cored bar 63 for inner circumference sealing includes an inner circumference engagement part 63a engaging with the inner peripheral surface of the outer ring 31a. The cored bar 43b for preloading is continuous to the inner circumference engagement part 63a, and the cored bar 43b for preloading is integrated with the cored bar 63 for inner circumference sealing.

As described above, in the power transmission device 1I, the inner circumference sealing member 61 includes the cored bar 63 for inner circumference sealing disposed on the inner peripheral side of the outer ring 31a, and the elastic body 62 for inner circumference sealing that is supported by the cored bar 63 for inner circumference sealing and slides with respect to the nut 13B as the opposing surface. The preload applying member 43 includes the elastic body 43a for preloading that generates a preload, and the cored bars 43b and 43c for preloading that support the elastic body 43a for preloading. The cored bar 63 for inner circumference sealing includes the inner circumference engagement part 63a engaging with the inner peripheral surface of the outer ring 31a, and is integrated with the cored bar 43b for preloading. Due to this, by performing work of fitting the inner circumference engagement part 63a to the inner peripheral side of the outer ring 31a, two components including the inner circumference sealing member 61 and the preload applying member 43 can be assembled with each other. Accordingly, man-hours for assembling work are reduced. In the seventh embodiment, the elastic body 43a for preloading is made of rubber, but an elastic body made of a metallic material may also be used.

(Eighth embodiment)

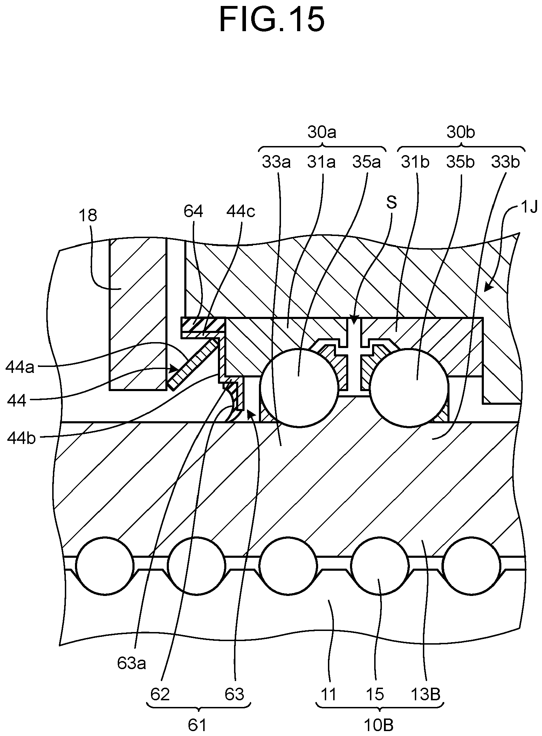

FIG. 15 is a cross-sectional view of the power transmission device according to an eighth embodiment. A power transmission device 1J according to the eighth embodiment is different from the power transmission device 1I according to the seventh embodiment in that the power transmission device 1J includes a preload applying member 44 in place of the preload applying member 43, and further includes an elastic body 64 for outer circumference sealing.

The preload applying member 44 includes a coned disc spring 44a and a cored bar 44b for preloading that supports the coned disc spring 44a. The cored bar 44b for preloading includes a seat surface 44c interposed between the coned disc spring 44a and the first main body 101. The cored bar 44b for preloading is integrated with the cored bar 63 for inner circumference sealing. The elastic body 64 for outer circumference sealing is made of rubber, and vulcanization-bonded to an outer peripheral surface of the seat surface 44c. An outer peripheral surface of the elastic body 64 for outer circumference sealing abuts on the inner peripheral surface 101b of the first main body 101, and closes a space between the outer peripheral surface of the outer ring 31a and the inner peripheral surface 101b of the first main body 101.

As described above, the power transmission device 1J includes the elastic body 64 for outer circumference sealing that closes a space between the outer peripheral surface of the outer ring 31a and the inner peripheral surface 101b of the housing 100, and the elastic body 64 for outer circumference sealing is fixed to the outer peripheral surface of the cored bar 44b for preloading and in slidably contact with the inner peripheral surface 10b of the housing 100. Due to the elastic body 64 for outer circumference sealing, grease hardly leaks out from between the outer ring 31a and the housing 100. The elastic body 64 for outer circumference sealing absorbs vibration of the outer ring 31a in the radial direction, and what is called a rattling sound is prevented from being caused. Additionally, by performing work of fitting the cored bar 63 for inner circumference sealing to the inner peripheral side of the outer ring 31a, three components including the inner circumference sealing member 61, the preload applying member 44, and the elastic body 64 for outer circumference sealing are assembled with each other at a time, and man-hours for assembling work are reduced.

(Ninth embodiment)

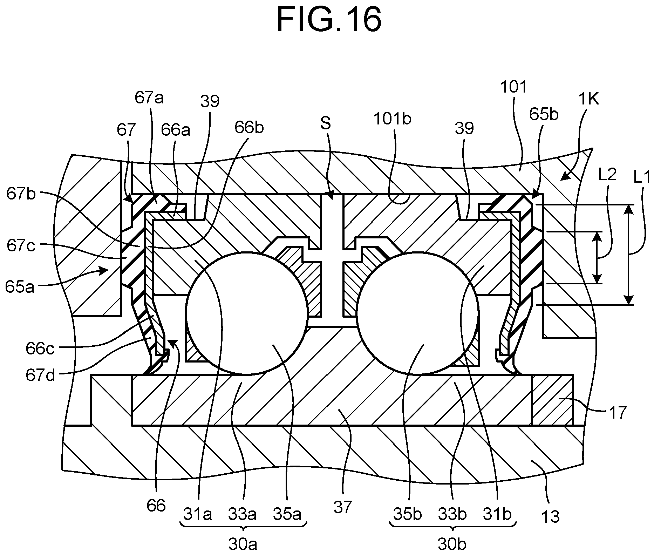

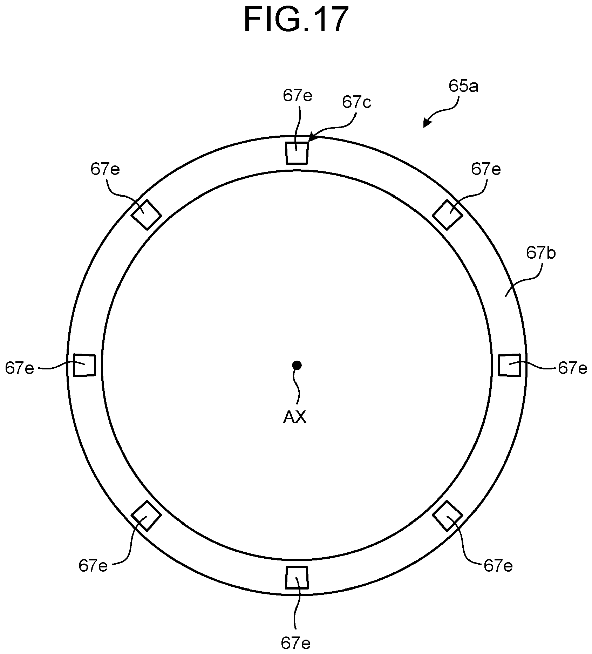

FIG. 16 is a cross-sectional view of the power transmission device according to a ninth embodiment. FIG. 17 is a schematic diagram extracting only a preload applying member and a high load absorbing part, which is viewed from the center axis AX direction. As illustrated in FIG. 16, a power transmission device 1K according to the ninth embodiment is different from the power transmission device 1C according to the second embodiment in that the power transmission device 1K includes a pair of annular members 65a and 65b in place of the preload applying members 40a and 40b.

The annular members 65a and 65b are planesymmetrically formed with respect to a virtual plane with the center axis AX as a perpendicular. Thus, of the annular members 65a and 65b, the following describes the annular member 65a disposed on the first direction side of the first bearing 30a as a representative example, and description about the annular member 65b will be omitted.

The annular member 65a includes a cored bar 66 and rubber 67 vulcanization-bonded to the cored bar 66. The cored bar 66 includes an outer circumference engagement part 66a engaging with the outer peripheral surface of the outer ring 31a, an abutting part 66b abutting on an end face on the first direction side of the outer ring 31a, and an extending part 66c extending radially inward from the abutting part 66b. The outer circumference engagement part 66a is disposed in a recessed part 39 formed on the outer peripheral surface of the outer ring 31a. Due to this, the outer circumference engagement part 66a is positioned radially inward as compared with the outer peripheral surface of the outer ring 31.

The rubber 67 includes an elastic body 67a for outer circumference sealing formed on an outer peripheral side of the outer circumference engagement part 66a, a high load absorbing part 67b formed on a side surface on the first direction side of the abutting part 66b, a preload applying member 67c projecting toward the first direction side from the high load absorbing part 67b, and an elastic body 67d for inner circumference sealing extending radially inward along the extending part 66c. The elastic body 67a for outer circumference sealing, the high load absorbing part 67b, the preload applying member 67c, and the elastic body 67d for inner circumference sealing are continuous to each other, and are integrated with each other.

The elastic body 67a for outer circumference sealing is in slidably contact with the inner peripheral surface 101b of the first main body 101. Due to this, the grease hardly leaks out from between the first main body 101 and the outer ring 31a. Furthermore, vibration of the outer ring 31a in the radial direction is absorbed by the elastic body 67a for outer circumference sealing, and what is called a rattling sound is prevented from being caused. The elastic body 67d for inner circumference sealing is in slidably contact with the outer peripheral surface of the inner ring 37. Thus, foreign substances are prevented from entering the first bearing 30a.

The high load absorbing part 67b and the preload applying member 67c are formed to have the same thickness in the center axis AX direction before assembly. A length in the radial direction of the high load absorbing part 67b is L1. A length in the radial direction of the preload applying member 67c is L2. Thus, regarding the length in the radial direction, the high load absorbing part 67b is formed to be longer than the preload applying member 67c. That is, a cross-sectional area of the high load absorbing part 67b is larger than that of the preload applying member 67c in a case of cutting them along the center axis AX.

The high load absorbing part 67b and the preload applying member 67c are assembled between the plate 18 and the outer ring 31a, and a compressive load is acting in the center axis AX direction. Due to this, the preload applying member 67c having a smaller cross-sectional area is deformed more largely than the high load absorbing part 67b. The preload applying member 67c presses the outer ring 31a, and applies a preload to the first bearing 30a. On the other hand, in a case in which a high load acts on the rack 88b in the center axis AX direction, the high load absorbing part 67b is deformed to absorb the load. As illustrated in FIG. 17, the high load absorbing part 67b is formed in a ring shape centered on the center axis AX. The preload applying member 67c includes a plurality of projections 67e that are formed in a rectangular shape when viewed from the center axis AX direction.

As described above, the power transmission device 1K includes the cored bar 66 fixed to one of the outer rings 31a and 31b of the first bearing 30a and the second bearing 30b, and the elastic body 67d for inner circumference sealing supported by the cored bar 66 and closing the inner peripheral side of each of the outer rings 31a and 31b. The cored bar 66 includes the cylindrical-shaped outer circumference engagement part 66a engaging with the outer peripheral surface of each of the outer rings 31a and 31b, and the recessed part 39 is formed on the outer peripheral surface of each of the outer rings 31a and 31b, the recessed part 39 being recessed radially inward and housing the outer circumference engagement part 66a. Due to this, it is possible to prevent the outer circumference engagement part 66a from abutting on the housing 100 to hinder sliding of the outer ring 31a.

The power transmission device 1K includes the elastic body 67a for outer circumference sealing that closes a space between the outer peripheral surfaces of the outer rings 31a and 31b and the inner peripheral surfaces 101b of the housing 100, and the elastic body 67a for outer circumference sealing is fixed to the outer peripheral surface of the outer circumference engagement part 66a and in slidably contact with the inner peripheral surface 101b of the housing 100. The elastic body 67a for outer circumference sealing can prevent the grease from leaking out from between the outer ring 31a and the housing 100, and secure a sliding property of the outer ring 31a. Furthermore, vibration of the outer ring 31a in the radial direction is absorbed by the elastic body 67a for outer circumference sealing, and what is called a rattling sound is prevented from being caused. Additionally, when the cored bar 66 is assembled with the outer ring 31a, the elastic body 67a for outer circumference sealing is also assembled therewith, so that man-hours for assembling work are reduced.

The power transmission device 1K includes the high load absorbing part 67b made of rubber that is interposed between the preload applying member 67c and each of the outer rings 31a and 31b to absorb a high load in the center axis AX direction. The preload applying member 67c is made of rubber, and a cross-sectional area thereof cut along the center axis AX direction is smaller than that of the high load absorbing part 67b. Accordingly, in a case of assembling the high load absorbing part 67b with the preload applying member 67c, the preload applying member 67c is deformed to press the outer ring 31a, and preloads are applied to the first bearing 30a and the second bearing 30b. On the other hand, in a case in which a high load acts in the center axis AX direction, the high load absorbing part 67b absorbs the high load. Thus, the preload applying member is prevented from being ruptured due to a high load acting thereon.

The preload applying member 67c of the power transmission device 1K includes the projections 67e that are disposed to be separated from each other in the circumferential direction. Due to this, the preload amount of the preload applying member 67c can be adjusted by changing the number of the projections 67e. The elastic body 67a for outer circumference sealing, the high load absorbing part 67b, the preload applying member 67c, and the elastic body 67d for inner circumference sealing are continuously and integrally formed by the rubber 67, but may be formed of another elastic body, or may be formed by combining a plurality of materials. For example, the preload applying member 67c may be formed of a material such as resin or a mixed material, or may be constituted of an elastic member such as a coned disc spring. Examples of the mixed material described above include a material obtained by mixing rubber and resin, and hardness of the material can be changed by adjusting a mixing ratio between the rubber and the resin. Furthermore, the high load absorbing part 67b can also be formed by a material different from that of the preload applying member 67c. Reference Signs List

| 1, 1A, 1B, 1C, 1D, 1E, 1F, 1G, 1H, 1I, 1J, 1K | POWER TRANSMISSION DEVICE |
|---|---|
| 10, 10B | BALL SCREW DEVICE |
| 11 | SCREW SHAFT |
| 13 | NUT |
| 15 | BALL |
| 17 | POSITIONING MEMBER |
| 18 | PLATE |
| 20 | PULLEY DEVICE |
| 30a | FIRST BEARING |
| 30b | SECOND BEARING |
| 31a, 31b | OUTER RING |
| 31e | PROJECTION |
| 33a, 33b, 37 | INNER RING |
| 35a, 35b | ROLLING ELEMENT |
| 36a, 36b | GROOVE FOR GREASE |
| 38a, 38b | RECESSED PART |
| 40a, 40b, 41, 42, 43, 44, 45, 67c | PRELOAD APPLYING MEMBER |
| 51 | BUFFER |
| 60, 61 | INNER CIRCUMFERENCE SEALING MEMBER |
| 64 | ELASTIC BODY FOR OUTER CIRCUMFERENCE SEALING |
| 66 | CORED BAR |
| 65a, 65b | ANNULAR MEMBER |
| 67a | ELASTIC BODY FOR OUTER CIRCUMFERENCE SEALING |
| 67b | HIGH LOAD ABSORBING PART |
| 67d | ELASTIC BODY FOR INNER CIRCUMFERENCE SEALING |
| 80 | ELECTRIC POWER STEERING DEVICE |
| 100 | HOUSING |
| 101 | FIRST MAIN BODY |
| 101b | INNER PERIPHERAL SURFACE |
| 103 | SECOND MAIN BODY |
| 105 | THIRD MAIN BODY |
| AX | CENTER AXIS |
| CNa, CNb | REFERENCE LINE |
| LC1, LC2, LC3, LC4, LC5, LC6 | EXTENSION LINE AT CONTACT ANGLE |

**Claims**

1. A power transmission device comprising:

   a housing;
   a ball screw device including a nut housed in the housing, a screw shaft passing through the nut, and balls disposed between the nut and the screw shaft;
   a first bearing and a second bearing that are disposed to be adjacent to each other in a center axis direction parallel with a center axis of the nut to be a face-to-face combination between the housing and the nut; and
   a preload applying member configured to apply preloads to the first bearing and the second bearing, wherein the first bearing and the second bearing respectively comprise outer rings that are fitted to the housing and separated from each other in the center axis direction, and
   the preload applying member presses the outer rings in a direction in which the outer rings come closer to each other, and a gap is formed between the outer rings.

2. The power transmission device according to claim 1, further comprising:
   one inner ring including a first inner ring raceway surface on which a rolling element rolls between the inner ring and the outer ring of the first bearing, and a second inner ring raceway surface on which a rolling element rolls between the inner ring and the outer ring of the second bearing.

3. The power transmission device according to claim 1, wherein two inner ring raceway surfaces are formed on an outer peripheral surface of the nut, the inner ring raceway surfaces subjected to hardening treatment on which rolling elements roll.

4. The power transmission device according to any one of claims 1 to 3, wherein a groove for grease that is recessed radially inward is formed on an outer peripheral surface of the outer ring.

5. The power transmission device according to any one of claims 1 to 4, wherein an O-ring is interposed between an outer peripheral surface of the outer ring and the housing.

6. The power transmission device according to any one of claims 1 to 4, wherein

   a cylindrical buffer is interposed between an outer peripheral surface of the outer ring and the housing, and the outer peripheral surface of the outer ring is covered by the buffer.

7. The power transmission device according to any one of claims 1 to 6, wherein

   the preload applying member is an elastic body made of a metallic material, and
   the outer ring includes a projection that projects from an end face and is interposed between the housing and the preload applying member.

8. The power transmission device according to any one of claims 1 to 6, wherein an inner circumference sealing member is disposed in any one of the first bearing and the second bearing, the inner circumference sealing member being configured to close a space between an inner peripheral surface of the outer ring and an opposing surface opposed to the inner peripheral surface of the outer ring.

9. The power transmission device according to claim 8, wherein

   the inner circumference sealing member comprises:

   a cored bar for inner circumference sealing disposed on an inner peripheral side of the outer ring; and
   an elastic body for inner circumference sealing supported by the cored bar for inner circumference sealing and configured to be in slidably contact with the opposing surface,

   the preload applying member comprises:

   an elastic body for preloading configured to generate a preload; and
   a cored bar for preloading supporting the elastic body for preloading, and

the cored bar for inner circumference sealing includes an inner circumference engagement part engaging with the inner peripheral surface of the outer ring, and is integrated with the cored bar for preloading.

10. The power transmission device according to claim 9, comprising:

an elastic body for outer circumference sealing configured to close a space between an outer peripheral surface of the outer ring and an inner peripheral surface of the housing, wherein
the elastic body for outer circumference sealing is fixed to an outer peripheral surface of the cored bar for preloading and in slidably contact with the inner peripheral surface of the housing.

11. The power transmission device according to any one of claims 1 to 4, comprising:

a cored bar fixed to any one of the outer rings of the first bearing and the second bearing; and
an elastic body for inner circumference sealing supported by the cored bar and configured to close an inner peripheral side of the outer ring, wherein
the cored bar includes a cylindrical outer circumference engagement part engaging with an outer peripheral surface of the outer ring, and
a recessed part is formed on the outer peripheral surface of the outer ring, the recessed part being recessed radially inward and housing the outer circumference engagement part.

12. The power transmission device according to claim 11, comprising:

an elastic body for outer circumference sealing configured to close a space between the outer peripheral surface of the outer ring and an inner peripheral surface of the housing, wherein
the elastic body for outer circumference sealing is fixed to an outer peripheral surface of the outer circumference engagement part and in slidably contact with the inner peripheral surface of the housing.

13. The power transmission device according to claim 12, comprising:

a high load absorbing part interposed between the preload applying member and the outer ring to absorb a high load in the center axis direction, wherein
a cross-sectional area of the preload applying member cut along the center axis direction is smaller than a cross-sectional area of the high load absorbing part.

14. The power transmission device according to claim 13, wherein the preload applying member includes a plurality of projections that are disposed to be separated from each other in a circumferential direction.

# FIG.1

EP 4 056 865 A1

# FIG.2

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

# FIG.16

# FIG.17

<table>
<tr><td colspan="2" align="center">**INTERNATIONAL SEARCH REPORT**</td><td>International application No.<br><br>PCT/JP2020/041449</td></tr>
</table>

**A. CLASSIFICATION OF SUBJECT MATTER**
Int. Cl. F16C27/06(2006.01)i, F16H25/20(2006.01)i, F16H25/22(2006.01)i,
F16H25/24(2006.01)i, B62D5/04(2006.01)i
FI: F16H25/24 G, F16H25/22 Z, F16H25/20 E, F16C27/06 B, B62D5/04
According to International Patent Classification (IPC) or to both national classification and IPC

**B. FIELDS SEARCHED**

Minimum documentation searched (classification system followed by classification symbols)
Int. Cl. F16C27/06, F16H25/20, F16H25/22, F16H25/24, B62D5/04

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 11-198828 A (MITSUBA CORP.) 27 July 1999, | 1-3 |
| Y | paragraphs [0020]-[0040], fig. 1, 3, paragraphs | 4-8, 11-12 |
| A | [0020]-[0040], fig. 1, 3, paragraphs [0020]-[0040], fig. 1, 3 | 9-10, 13-14 |
| Y | JP 2018-21609 A (NSK LTD.) 08 February 2018, paragraph [0034], fig. 5 | 4-8, 11-12 |
| Y | JP 2016-516969 A (SCHAEFFLER TECHNOLOGIES AG & CO. KG) 09 June 2016, paragraphs [0018]-[0021], fig. 1 | 4-8, 11-12 |
| Y | JP 2005-221024 A (NSK LTD.) 18 August 2005, paragraph [0028], fig. 10 | 6-8, 11-12 |

☒ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>02.12.2020 | Date of mailing of the international search report<br>15.12.2020 |
|---|---|
| Name and mailing address of the ISA/<br>　　Japan Patent Office<br>　　3-4-3, Kasumigaseki, Chiyoda-ku,<br>　　Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2020/041449

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2006-224945 A (NSK LTD.) 31 August 2006, paragraphs [0066]-[0070], fig. 6 | 7-8, 11-12 |
| Y | JP 2001-165179 A (NTN CORP.) 19 June 2001, paragraphs [0018], [0019], fig. 4, 5 | 8, 11-12 |
| A | US 2015/0183455 A1 (TRW AUTOMOTIVE U.S. LLC) 02 July 2015, paragraphs [0035]-[0060], fig. 1-4 | 1-14 |

Form PCT/ISA/210 (continuation of second sheet) (January 2015)

**INTERNATIONAL SEARCH REPORT**
Information on patent family members

International application No.

PCT/JP2020/041449

| Patent Documents referred to in the Report | Publication Date | Patent Family | Publication Date |
|---|---|---|---|
| JP 11-198828 A | 27.07.1999 | US 6186268 B1<br>column 4, line 47 to<br>column 8, line 11,<br>fig. 1, 3<br>EP 930214 A2 | |
| JP 2018-21609 A | 08.02.2018 | US 2019/0195276 A1<br>paragraph [0060],<br>fig. 5<br>KR 10-2019-0026820 A<br>CN 109563878 A | |
| JP 2016-516969 A | 09.06.2016 | WO 2014/180473 A1<br>page 6, line 27 to<br>page 8, line 2, fig.<br>1<br>DE 102013208518 A1<br>CN 105209773 A | |
| JP 2005-221024 A | 18.08.2005 | (Family: none) | |
| JP 2006-224945 A | 31.08.2006 | US 2009/0294203 A1<br>paragraphs [0166]-<br>[0170], fig. 6 | |
| JP 2001-165179 A | 19.06.2001 | (Family: none) | |
| US 2015/0183455 A1 | 02.07.2015 | (Family: none) | |

Form PCT/ISA/210 (patent family annex) (January 2015)

**EP 4 056 865 A1**

REFERENCES CITED IN THE DESCRIPTION

**Patent documents cited in the description**

- JP 2018070117 A